# EUROPEAN PATENT SPECIFICATION

(11) **EP 3 705 693 B1**
(45) Date of publication and mention of the grant of the patent: **27.04.2022**
(21) Application number: 20160002.0
(22) Date of filing: 28.02.2020
(51) Int. Cl.: F01N 3/10, F01N 11/00, F02D 41/02, F02D 41/14

(54) **METHOD FOR EVALUATING AGEING OF A THREE-WAY CATALYST**
VERFAHREN ZUR BEWERTUNG DER ALTERUNG EINES DREI-WEGE-KATALYSATORS
PROCÉDÉ D'ÉVALUATION DU VEILLISSEMENT D'UN CATALYSEUR À TROIS VOIES

(30) Priority: 06.03.2019 IT 201900003267
(43) Date of publication of application: 09.09.2020
(73) Proprietor: FPT Motorenforschung AG, 9320 Arbon (CH)
(72) Inventor: GIANELLA, Matteo, 9000 ST. GALLEN (CH); CAGNAZZO, Emanuele, 10099 SAN MAURO TORINESE (TO) (IT)
(74) Representative: Lovino, Paolo

(56) References cited:
- EP-A2- 1 837 503
- DE-A1-102015 114 490
- US-A1- 2016 108 833
- US-A1- 2018 320 571
- US-A1- 2019 040 784

## Description

### CROSS-REFERENCE TO RELATED APPLICATIONS

This Patent Application claims priority from Italian Patent Application No. 102019000003267 filed on March 6, 2019.

### TECHNICAL FIELD

The present invention concerns a method for evaluating ageing of a three-way catalyst.

### BACKGROUND OF THE INVENTION

As it is known, spark ignition internal combustion engines are provided with an exhaust after-treatment system usually having a three-way catalyst (TWC). The latter is able either to oxidize carbon oxides (CO) and hydrocarbon residues (HC) or to reduce nitrogen oxides (NOx), when the engine operates within a small range of the air/fuel ratio around the stoichiometric condition.

Deviations of the air/fuel ratio from this small range can lead to a huge and fast degradation in the pollutants conversion efficiencies. In other words, if the air/fuel mixture supplied into the engine is too lean, NOx conversion drops; on the other hand, if it is too rich, the CO and HC conversion drops and ammonia (NH3) is also produced in the catalyst. Therefore, the control of this system is quite challenging, especially because of the high sensitivity to small deviations in the air/fuel ratio, that naturally occur during the operating conditions.

Besides, the pollutants conversion performed in the catalyst does not only depend on the instantaneous air/fuel ratio, but also on other parameters (e.g. temperature, oxidation level, etc.). An ideal control strategy should be able to stabilize the conditions of catalyst around its optimal condition, and to reach this optimal condition as fast as possible when external disturbances occur (e.g. transients, fuel cut-offs, misfires, etc.).

Examples of model-based control strategies have been proposed to obtain the stoichiometric operating condition in gasoline fueled engines.

As the performance of three-way catalysts decreases over time, the output data given by model-based control strategies are no more effective to control fuel supply in the engine and/or to control gas conversion in the catalyst, after a certain period of time. In other words, after such time, a mismatch appears between the output data given by the model and the real phenomena in the catalyst.

Therefore, a need is felt to evaluate ageing of the catalyst, without manual intervention on the same catalyst, so as to optimize the control performed by the above mentioned strategies on fuel supply.

More in general, an ageing evaluation is needed to emit a warning signal, especially if ageing is increasing over a given threshold. An aim of the present invention is to meet the above-mentioned needs in a simple and economic way.

DE102015114490A1 discloses a method that estimates the catalyst age in response to the estimate of a catalyst transfer function gain magnitude. In US2016/108833A1, a method determines whether or not the catalyst is aged by comparing the output voltage of an oxygen sensor, disposed at an end of the catalyst, with a reference range. EP1837503A2 is a similar solution: if the catalyst is deteriorated, an oxygen sensor output greatly changes, and this difference is detected. US2019040784 discloses a controller that functions as a catalyst abnormality diagnostic device, on the basis of signals given by three oxygen sensors.

### SUMMARY OF THE INVENTION

The aforementioned aim is reached by a method for evaluating ageing of a three-way catalyst, as claimed in claim 1, and by an electronic control unit, in which such a method is implemented, according to claim 11.

### BRIEF DESCRIPTION OF DRAWINGS

For a better understanding of the present invention, a preferred embodiment is described in the following, by way of a non-limiting example, with reference to the attached drawings wherein:
- Figure 1 is a diagram schematically showing an assembly, in which a preferred embodiment of the method according to the present invention is implemented for evaluating ageing of a three-way catalyst;
- Figure 2 shows a set-point diagram having an oscillating pattern, implemented in the assembly of figure 1;
- Figure 3 shows, in a schematic and simplified manner, a model-based estimation block, according to a preferred aspect of the method of the present invention; and
- Figure 4 is a flowchart showing, in a schematic and simplified manner, some method steps implemented in the assembly of figure 1.

### DETAILED DESCRIPTION OF THE INVENTION

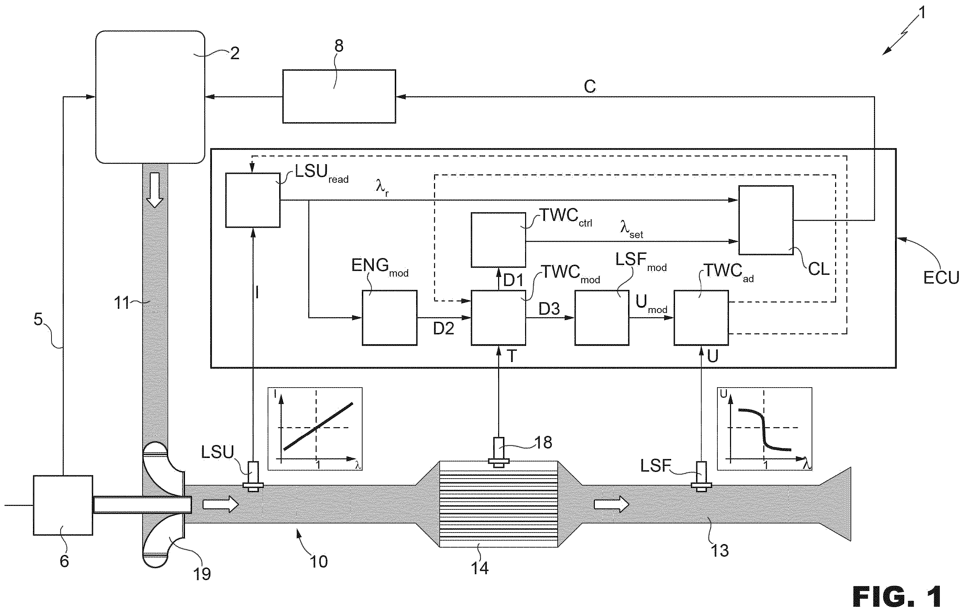

In figure 1, reference number 1 designates, as a whole, a propulsion assembly (diagrammatically and partially shown) comprising a spark ignition internal combustion engine 2 supplied with air and fuel. In particular, such fuel is defined by natural gas. In particular, an air flow is supplied in known manner (e.g. through a line 5 provided with a compressor 6) into a plurality of engine cylinders in response of a throttle command set by a user. On the other hand, the propulsion assembly 1 comprises an injection device 8, known per se and comprising a plurality of fuel injectors controlled by control signals C to inject fuel into the engine cylinders.

The control signals C are emitted, in use, by an electronic control unit (ECU) of the assembly 1, in response of a detected amount of air entering the engine cylinders and on the basis of a control strategy, which is implemented in the ECU and will be described later on.

The assembly 1 further comprises an exhaust after-treatment system 10, in turn comprising: an outlet pipe 11 arranged at an outlet of the engine 2, to collect and channel exhaust gases exiting from the engine cylinders; a tailpipe 13, to discharge the exhaust gases in the external environment; a three-way catalyst 14 arranged between the outlet pipe 11 and the tailpipe 13; a first lambda sensor LSU arranged between the engine cylinders and the catalyst 14 (e.g. at the outlet of the engine 2); and a second lambda sensor LSF arranged at the tailpipe 13.

Conveniently, a sensor 18 is added to detect operating parameters (e.g. temperatures) of the exhaust gases inside the catalyst 14. According to a variant, the sensor 18 is not provided, and the same operating parameters can be estimated by additional calculation on the ECU (e.g. by a thermal model of the gas flow and of the catalyst),

In the shown preferred embodiment, a gas turbine 19 is provided in the outlet pipe 11 so as to operate the compressor 6.

The lambda sensor LSU emits an output signal I, which is indicative of an actual oxygen content in the exhaust gases exiting from the engine 2, and therefore indicative of air/fuel ratio λ of the mixture combusted in the engine cylinders.

In the meantime, the lambda sensor LSF emits an output signal U, which is indicative of an actual oxygen content in the exhaust gases flowing in the tailpipe 13, after the conversion carried out in the catalyst 14, and therefore indicative of a theoretical air/fuel ratio λ that would have produced such exhaust gases.

As diagrammatically shown in figure 1, according to a preferred aspect of the present disclosure, the lambda sensor LSU is configured in such a manner that the response characteristic curve of the output signal I is linear, as a function of the ratio λ. This kind of lambda sensor is available on the market and, for its measurements, usually takes a reference oxygen value by means of a transducer arranged inside the sensor itself. On the other hand, the lambda sensor LSF is configured in such a manner that the response characteristic curve of the output signal U has a higher sensitivity in a range around the value λ=1 (i.e. around the stoichiometric condition), by way of example in a range of the ratio λ between 0.99 and 1,01. In view of this response curve, this kind of lambda sensor is generally known as a "switch type sensor". It is available on the market and, in general, is more precise and reliable than the sensor LSU in detecting the stoichiometric condition (λ=1), because it usually takes a reference oxygen value by means of a transducer arranged outside the sensor, for its measurements.

The signal I is received by the ECU, which comprises a control block LSUread configured to determine a variable value λr, indicative of the actual air/fuel ratio of the mixture generating the exhaust gases at the sensor LSU, on the basis of the signal I. In particular, the block LSUread converts the signal I (a current value) into an air/fuel ratio value and manages possible compensations necessary for sensor management.

Preferably, the value λr can be corrected by the block LSUread according to a drift adaptation algorithm, as it will be disclosed in detail later on, and corresponds to the air/fuel ratio detected by the sensor LSU if no correction is applied.

The ECU further comprises a control block CL, which receives, as inputs, the value λr and a set-point λset. The block CL emits, as output, the control signals C and is configured so as to compare the value λr and the set-point λset and, therefore, to control the injection device 8 according to a feedback loop control, in a manner that is commonly known.

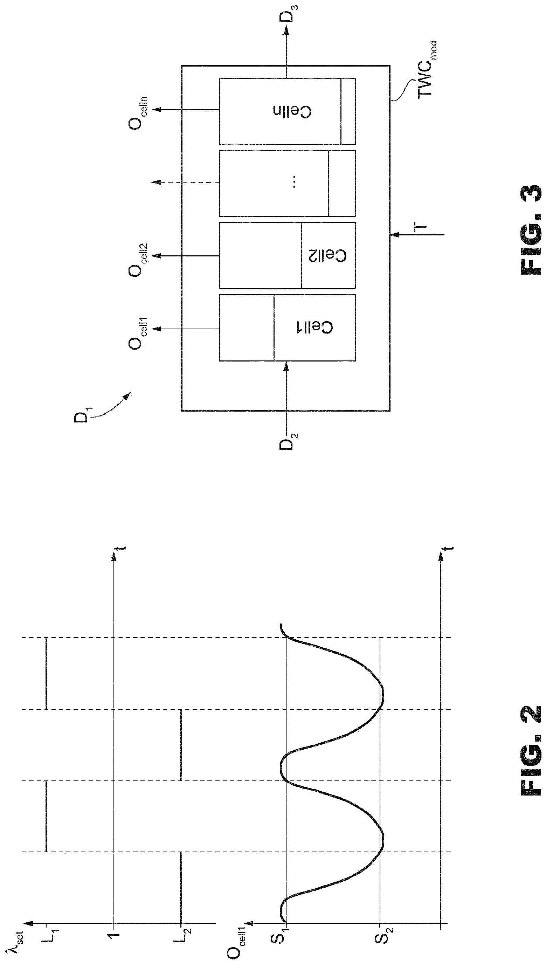

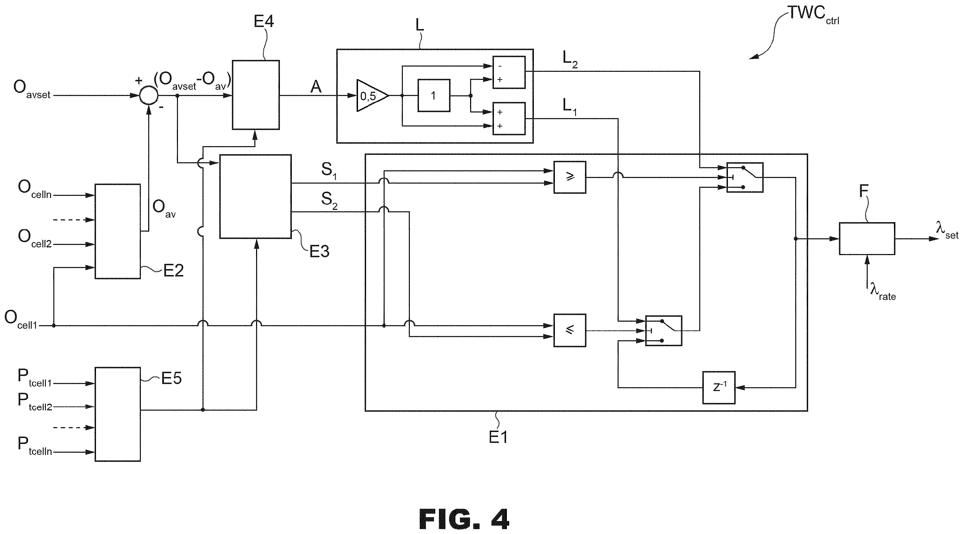

The set-point λset is variable in time (t) and has an oscillating pattern, also known as wobbling pattern. In particular, as schematically shown in figure 2, the wobbling pattern of the set-point λset is defined by an upper constant level L1, higher than 1, and a lower constant level L2, lower than 1. Preferably, L1 and L2 are symmetric values in relation to the stoichiometric conditions λset=1 (block L in figure 4).

With reference to figure 1, switching of the set-point λset from level L1 to level L2, and viceversa, is carried out by an elaboration block TWCctrl in response of estimated data D1 generated by a model-based estimation block TWCmod, which operates in response of estimated data D2 and in response of the operating state in the catalyst 14, which can be estimated as well or, partially, measured by means of dedicated sensors, e.g. temperature sensors.

The estimated data D2 are generated by an engine mathematical model, by way of example a map-based, and linear in parameters, model (estimation block ENGmod). Such model is configured to estimate the exhaust gas composition at the engine outlet (such estimated composition corresponding to the data D2) in response to an input value indicative of the air/fuel ratio of the mixture just combusted in the engine 2 and in response to other available engine parameters that may affect emissions, e.g. engine speed, throttle position, ignition timing, boost pressure etc. Preferably, the above input value indicative of the air/fuel ratio is defined by the value λr outputted by the control block LSUread.

In the meantime, the block TWCmod comprises a kinetic mathematical model of the catalyst 14 and is configured to estimate quantities indicative of the oxygen contents inside the catalyst 14.

In particular, as schematically shown in figure 3, in the model stored in the block TWCmod, the catalyst is modelled as divided in a plurality of cells (Cell1, Cell2, ... Celln), which correspond to, and simulate, respective actual areas in the catalyst 14, such areas (not shown) being arranged in series along the flow direction of the exhaust gases. Each cell is associated with a respective oxygen level (Ocell1, Ocell2, ... Ocelln) indicative of the oxygen content actually stored in the corresponding area of the catalyst 14.

In particular, the oxygen levels of the cells and the oxygen level of the whole modelled catalyst are indicated as a percentage of respective given maximum storage capacities, defined as a function of the features of the real catalyst 14. In particular, the values of such maximum storage capacities (indicated in mol/m3, by way of example) can be set in the model during calibration, at the beginning of the operating conditions of the system 10.

The block TWCmod is configured to simulate the operation of the catalyst 14, to estimate the oxygen levels (Ocell1, Ocell2, ... Ocelln), corresponding to the output data D1, and to estimate the composition of the exhaust gases exiting from the catalyst 14 and flowing along the tailpipe 13. Such estimated composition is generated as output data D3.

The models stored in the blocks ENGmod and TWCmod are not described in detail, as they are commonly known in the art, for controlling gasoline engines, by way of example in the following documents:
- "Modelling and control of three-way catalysts", Auckenthaler Theophil S., Doctoral Thesis ETH, 2005;
- "A Post-Catalyst Control Strategy Based on Oxygen Storage Dynamics", Michael Tomforde et al., SAE Internation, 2013;
- "Model Based Control of a Three-way Catalyst Based on the Oxygen Storage Level of the Catalyst", Pankaj Kumar and Imad Makki, Ford Motor Company, SAE International, 2017.

As mentioned above, the estimated oxygen levels (Ocell1, Ocell2, ..., Ocelln) are used as inputs in the block TWCctrl, in which a control strategy is implemented so as to determine the set-point λset. Such control strategy is schematically and partially shown in figure 4 and compares a parameter indicative of an oxygen level, estimated for at least one of the above mentioned cells, with an upper threshold S1 and with a lower threshold S2 (evaluation and switching block E1) . In particular, the thresholds S1 and S2 are compared with a parameter indicative of the estimated oxygen level (Ocell1) of the first cell (Cell1), i.e. the cell that is associated with the first area in the catalyst 14 along the flow direction. More in particular, such parameter is defined by the estimated oxygen level (Ocell1) of the first cell (Cell1) . The choice of the first cell is advantageous because the operating state (e.g. the actual oxygen content) of the corresponding first area is the most responsive to variations in the exhaust gas composition (e.g. to variations in the engine operating conditions).

As shown in figure 2, when the estimated oxygen level Ocell1 gets lower than the threshold S2, the set-point λset is switched to the level L1, so as to bring the engine operating conditions to a lean combustion; if the estimated oxygen level Ocell1 becomes higher than the threshold S1, the set-point λset is switched to the level L2 so as to bring the engine operating conditions to a rich combustion. In this way, the combustion in the engine 2 continuously oscillates between a rich phase and a lean phase.

In more detail, when λset=L1 a lean combustion is set by the block CL controlling the injection device 8 (fig. 1). In these conditions, the exhaust gases exiting from the engine cylinders have an oxygen excess (with respect to the stoichiometric condition). Such oxygen excess is detected by the sensor LSU, so that the value λr is higher than one. In the meantime, this operating condition causess an oxygen accumulation in the areas of the catalyst 14. In response to the value λr, the block TWCmod estimates these increasing oxygen levels in the cells of the model.

In practice, with reference to figure 2, the estimated oxygen level Ocell1 progressively increases, until it reaches the threshold S1. At this point, the set-point λset is switched to the level L2 (block E1), and this switching leads to a rich combustion in the engine cylinders, thanks to the control carried out by block CL.

In these conditions, the exhaust gases exiting from the engine cylinders have an oxygen content lower than the stoichiometric condition. The reduction in the oxygen content of the exhaust gases is detected by the sensor LSU, so that the value λr becomes lower than 1. In the meantime, as a consequence of the rich combustion, the oxygen stored in the areas of the catalyst 14 decreases. Then, in response to the value λr, the block TWCmod estimates the reduction in the oxygen levels of the cells in the model. The estimated oxygen level Ocell1 progressively decreases, until it reaches again the threshold S2. At this point, the set-point λset is switched to the level L1 (block E1), so that the cycle of lean phase and rich phase is repeated.

From the above, it should be clear that the block E1 controls the timing of the wobbling pattern, in response to the two thresholds S1 and S2, and that the catalyst dynamics, in terms of oxygen storage, follow the wobbling pattern of the set-point λset. In particular, this kind of operation avoids possible dynamic deactivation in the conversion of the methane residues in the system 10, when natural gas is used as fuel.

With reference to figure 4, preferably, a filtering block F can be provided downstream of the block E1, so as to possibly limit the rate of the changes between levels L1 and L2 in the wobbling pattern, as a function of an input or a given threshold (λrate).

According to the preferred control strategy implemented in the block TWCctrl, the thresholds S1 and S2 are adjusted in response to an average oxygen storage (Oav) in the catalyst (control block E3). The average oxygen storage Oav is calculated from the estimated oxygen levels (Ocell1,Ocell2, etc.) of all the cells, preferably as a weighted average (calculation block E2) and, then, is compared with a given set-point Oavset. As an optimal operation is reached when the oxygen levels in the catalyst 14 are at an intermediate value, e.g. at a value of 50% (in relation to a given maximum storage capacity), the set-point Oavset can be set by default at this 50% value. In steady state conditions, the thresholds S1 and S2 are symmetric in relation to the set-point Oavset, i.e. S1 is slightly higher than 50% (equal to 55%, by way of example) and the threshold S2 is slightly lower than 50% (equal to 45%, by way of example).

The actual and estimated oxygen storage values are, obviously, variable according to the operating conditions. If the average oxygen storage Oav is lower than the set-point Oavset, both the thresholds S1 and S2 are increased (block E3), so as to reach a relatively high oxygen level in the first area/cell and afterwards accumulate oxygen in the areas/cells downstream of the first one; if the average oxygen storage Oav is higher than the set-point Oavset, both the thresholds S1 and S2 are decreased (block E3), so as to reach a relatively low oxygen level in the first area/cell and afterwards reduce the oxygen content in the areas/cells downstream of the first one.

In this way, the behavior of the system 10 is closer to the optimal operation, i.e. it is able to automatically adapt to different engine operating conditions.

Preferably, the adjustment strategy implemented in block E3 to increase/decrease the thresholds S1 and S2 comprises a proportional-integrative control, as a function of the difference between the average oxygen storage Oav and the set-point Oavset. In other words, the position of the window defined by the two thresholds S1, S2 is moved up or down as a function of the above mentioned difference.

By way of example, before starting the engine 2, the oxygen storage in the catalyst 14 is near to 0%, so that it is necessary to charge oxygen into the catalyst areas/cells. For this purpose, the thresholds S1 and S2 are set by block E3 to relatively high values, e.g. to respective given maximum values (95% and 85%, by way of example). As a consequence, thanks to the control carried out by block E1, the oxygen level (Ocell1) in the first area/cell is brought to an average value between S1 and S2 (e.g. 90%). Afterwards, the oxygen level (Ocell1) begins to oscillate around such average value, and in the meantime the oxygen levels (Ocell2, ... Ocelln) in the following areas/cells increase.

In an analogous manner, after a fuel cut-off phase the oxygen storage in the catalyst 14 is at high levels, i.e. the average oxygen storage Oav is higher than the set-point Oavset. In this conditions, the thresholds S1 and S2 are set by block E3 to very low values, e.g. to respective given minimum values (5% and 15%, by way of example), so as to cause a rich combustion, until the oxygen level Ocell1 in the first cell Cell1 reaches an equilibrium at an average value between S1 and S2 (e.g. 15%), thanks to the control carried out by block E1. Afterwards, while the oxygen level Ocell1 in the first area/cell oscillates around such average value, the oxygen levels (Ocell2, ... Ocelln) in the following areas/cells decrease.

In this way, the set-point Oavset is reached in a relatively fast manner.

Preferably, also the amplitude A of the wobbling pattern between the rich and the lean phase (A=L1-L2) is adjusted (control block E4), as a function of the difference between the average oxygen storage Oav and the set-point Oavset. In this way, if the data D1 estimated by the model are close to the desired storage, the levels L1 and L2 are brought closer to each other, so as to set a wobbling pattern very near to the stoichiometric condition. The amplitude A can be reduced up to a given minimum value higher than zero (by way of example of 0,04, corresponding to a wobbling pattern having L1=1,02 and L2=0,98). This kind of adjustment prevents emission peaks, also on aged systems, and is particularly beneficial in avoiding production of ammonia (NH3) in the catalyst 14.

On the other hand, when the average oxygen storage Oav is relatively far from the set-point Oavset, the amplitude A is increased to a relatively high value, up to a given maximum value (by way of example of 0,2, corresponding to a wobbling pattern having L1=1,1 and L2=0,9) . In this way, a faster recovery from fuel cut-offs, misfuels and other disturbances is allowed.

More preferably, the strategy implemented in the block TWCctrl further comprises a control block E5 to bring the thresholds S1 and S2 and the amplitude A to respective given maximum values when an estimated palladium oxidation - determined on the basis of further outputs (Ptcell1, Ptcell2, ..., Ptcelln) of the model stored in the block TWCmod - reaches a given threshold.

In steady state conditions, and the oxygen storage is in equilibrium, the composition of the exhaust gasses at the tailpipe 13 is ideally "stoichiometric", i.e. the sensor LSF should detect λ=1. Every slight deviation from λ=1 is immediately reflected in the measurement of the sensor LSF, thanks to its response curve having high sensitivity around the stoichiometry. According to a preferred aspect of the present invention, the sensor LSF is used to detect and compensate possible drifts between the output data D1 of the model and the real conditions.

The main phenomena that can cause drifts/inaccuracies are:
- possible errors in λr (i.e. the air/fuel ratio value, inputted into the models, is different from the real one), e.g. the measurement of the sensor LSU is not precise enough;
- catalyst ageing.

For the first phenomenon, a drift adaptation algorithm is implemented, as briefly mentioned above. For this purpose, the data D3 (calculated in the block TWCmod on the basis of the model) are inputted into a model-based estimation block (LSFmod), which comprises an empiric model of the sensor LSF, configured to simulate the operation of the sensor LSF. In other words, the block LSFmod is configured to generate, as output, an estimated signal or predicted signal (Umod) for the measurements that are made (or will be made) by the sensor LSF on the basis of data indicative of the gas composition at the tailpipe (data D3).

By way of example, this empiric model is based on a correlation between the exhaust gas composition and the sensor signal. This approach is known in the art, by way of example from the already mentioned reference: "Modelling and control of three-way catalysts", Auckenthaler Theophil S., Doctoral Thesis ETH, 2005.

In steady state conditions, assuming that the sensors LSU and LSF were reading exactly the actual λ, there should be a direct correlation between the average values of the two measurements carried out by the sensors LSU and LSF, on the basis of the conversion performed in the catalyst 14 on the gas composition. In other words, the signals Umod and U should substantially correspond to each other.

To check this correspondence, the estimated signal Umod outputted by block LSFmod and the actual signal U of the LSU sensor are elaborated and compared (control block TWCad, fig. 1), so as to evaluate possible mismatches. In other words, the reading of the sensor LSF is taken as a reference to recognize a drift (the choice of this reference is effective, as the sensor LSF is more reliable around stoichiometry than the sensor LSU).

In particular, respective average values of the signals Umod and U are calculated and compared with each other (block TWCad). If there is a mismatch between such average values, or this mismatch is higher than a given threshold, the estimations carried out by the model-based strategy are not precise, and a correction/adaptation is needed. According to a preferred aspect of the present invention, the drift correction/adaptation is carried out by acting on the reading of the sensor LSU, in order to align the output of the models (signal Umod) with the one of the real sensor LSF.

To extract the information on the average values of the signals U and Umod, preferably the wobbling pattern is exploited. Indeed, in steady state conditions, the wobbling pattern is symmetric and, therefore, the signal U is centered around its average value: this phenomenon implies that it is sufficient to consider a single wobbling period (or a very low number of periods) to calculate the average value of the signals U and Umod, without exploiting any filter on the signals. In other words, the drift adaptation algorithm is triggered at the end of every wobbling period, i.e. the duration of one wobbling period defines the sampling rate, which is variable, to evaluate the actual correspondence between the signals U and Umod. This choice is advantageous, in terms of fast response times, because the wobbling periods are relatively short, in practice (by way of example, between 1 and 3 s).

In particular, once the difference between the two average values has been calculated, a proportional-integrative control is implemented to calculate a correction factor used to correct the reading of the sensor LSU, preferably via a simple multiplication to obtain the corrected value λr. In particular, when comparing the average values of the signals U and Umod, if the outcome of the comparison reveals that sensor LSF detects a richer gas mixture than expected (meaning that the model has drifted towards "lean"), the correction factor in the block LSUread will be brought to be lower than one, i.e. it will cause the corrected value λr to become "richer", until the output data of the model and reality are re-aligned. On the other hand, if the outcome of the comparison between the average values of the signals U and Umod reveals that sensor LSF detects a leaner gas mixture than expected (meaning that the model has drifted towards "rich"), the correction factor in the block LSUread will be higher than one, i.e. it will cause the corrected value λr to become "leaner".

The integrative part of the control calculating the correction factor allows for considering also the history of the past drift events, for a better control.

According a preferred aspect of the present invention, a further adaptation strategy is implemented in block TWCad to correct errors due the catalyst ageing. An aged system shows higher breakthrough and, therefore, its real behavior has higher variations in the conversion outcome and in the gas composition between the rich and the lean phases of the wobbling. To evaluate ageing, a parameter indicative of the signal amplitude for each of the signals Umod and U is determined. Preferably, such parameter comprises, or is defined by, the standard deviation (difference between the average of the squared signal and the square of the averaged signal). Just as explained above for the drift adaptation algorithm, preferably, the values of this parameter are determined over a given sampling time defined by a single wobbling cycle, or a few wobbling cycles, without filtering the signals. If the standard deviation of the signal U becomes higher than the estimated one (extracted from the signal Umod), apart from a possible minimum threshold to be exceeded, it is an indication that the system 10 is ageing. In practice, the oxygen storage capacity of the catalyst 14 is reducing over time.

Preferably, this ageing adaptation algorithm is carried out when there is no substantial drift between the average values of the signals U and Umod, because a drift could cause a more or less noisy signal. In other words, the drift adaptation algorithm has priority over this ageing adaptation or evaluation algorithm: only when possible drifts have been compensated, the ageing adaptation or evaluation is enabled.

Preferably, the ageing adaptation has an output defined by a reduction factor used to cause a reduction in the value of the catalyst maximum storage capacity (this value being set in the model stored in the block TWCmod, as mentioned above) . As an automatic consequence, the above mentioned set-point Oavset reduces.

In particular, to compare the amplitudes of the signals U and Umod and therefore estimate ageing, the ratio between the standard deviations of such signals U and Umod is calculated. Preferably, this ratio is afterwards integrated. The integration allows for considering that the catalyst ageing is a cumulative phenomenon.

Finally, the outcome of this elaboration/comparison is used to determine the reduction factor, defining the above mentioned reduction in the modelled storage maximum capacity.

As an alternative or in combination with the reduction of the maximum storage capacity set in the model, the result of the elaboration, carried out for comparing the values representing the amplitudes of the two signals U and Umod, is used to emit a warning signal to the ECU for diagnosis purposes and/or a warning signal to the driver, indicating that the system 10 is ageing. In other words, this result can be compared with at least one given threshold and, if the threshold is exceeded, the warning is activated. This warning function about ageing could be used also for gasoline fueled engines, e.g. by implementing the wobbling pattern control for a limited period of time so as to obtain the oscillating signals U and Umod and compare their amplitudes (standard deviations).

Clearly, different elaboration steps can be performed to evaluate if the system is ageing, i.e. if the amplitude of the oscillating signal U becomes dangerously higher than the amplitude of the oscillating estimated signal Umod. By way of example: a difference between the two standard deviations can be calculated, instead of calculating their ratio; and/or a given threshold has to be exceeded before actually setting a correction factor to reduce the maximum storage capacity of the ageing adaptation algorithm.

According to possible variants, not shown and not described in detail, a wobbling pattern for the set-poin λset can be sent to the control block CL:
- independently from fuel supply control strategies optimizing engine performance and/or catalyst performance and/or independently from the output data D1; or
- as part of a supply control strategy different from the one implemented in block TWCctrl, described above.

By way of example, a pre-defined wobbling pattern can be set in the design phase and stored in a memory of the ECU.

According to another example (not shown) that is not part of the present invention, when the fuel supply is controlled by means of the wobbling pattern, the ECU calculates a value for the parameter, or index, representing the amplitude of the oscillating signal U and compares such calculated value with a reference threshold (or a reference range) that conveniently can be set in the design phase and stored as a constant value in a memory of the ECU. If this reference threshold is exceeded, a warning signal is emitted so as to inform the driver that the system 10 is ageing. According to this embodiment, preferably, no model to be corrected is provided in the ECU.

Analogously to the model-based embodiment, described above, this ageing evaluation algorithm (e.g. the comparison with the stored reference threshold and/or the emission of the warning signal) is carried out only when it is very likely that there is no drift in the average value of the signal U. In particular, the ECU can calculate an average value of the signal U and compare such average value with at least one target value, which is preferably set in the design phase and stored as a constant value in a memory of the ECU. The latter starts the ageing evaluation algorithm when the calculated average value of the signal U is sufficiently near to the target value. By way of example, the ECU starts the ageing evaluation algorithm if the calculated average value is within a target range between two limit values stored in the ECU memory.

On the other hand, in the model-based embodiment described above, such target value (or target range) is defined as a function of the calculated average value of the signal Umod. According to another example (not shown) that is not part of the present invention, the wobbling pattern and the ageing evaluation algorithm are used to carry out periodical checks, so as to identify a possible ageing condition in each check by means of a comparison with the results of at least one of the previous checks.

By way of example, the calculated value for the parameter representing the amplitude of the oscillating signal U is compared with at least one corresponding value that was calculated in one or more of the previous checks, to evaluate the increase in the evaluated parameter. A warning signal can be emitted or not, as a function of such increase. This embodiment can also allow for monitoring the ageing condition over time so as to identify when it could compromise the pollutants conversion in the catalyst. Also in this case, preferably, no model-based algorithm is necessary in the ECU.

In view of the foregoing, the advantages of the evaluation method according to the invention are apparent.

Indeed, thanks to the wobbling pattern set for the set-point λset so as to bring the combustion conditions in the engine 2 to switch between "lean" and "rich", the signal U oscillates and this oscillation can be effectively used to identify a catalyst ageing condition, by evaluating an index or parameter (conveniently the standard deviation) indicating the amplitude of the signal U.

If an ageing condition is identified in view of this evaluation, such identification automatically and directly results in a correction in the models, and/or in a correction of the control strategies, and/or in a warning signal.

The evaluation according to the present invention does not need any manual intervention, i.e. it can be carried only via software, so that the automatic corrections and/or the automatic warning signals can be directly provided by the block TWCad.

Besides, the evaluation method is relatively precise and has low response times.

The ageing evaluation algorithm is particularly advantageous in combination with model-based algorithms provided to control the fuel supply, as such models can be corrected in response to the ageing evaluation. In addition, thanks to the models, it is possible to use the amplitude of the signal Umod as reference to be compared with the corresponding value for the measurement signal U, after having provided the wobbling pattern.

Finally, it is clear that modifications can be made to the described method, which do not extend beyond the scope of protection defined by the attached claims.

For example, a parameter different from the standard deviation can be taken as indication of the oscillation amplitude of the signals U and Umod.

## Claims

1. - A method for evaluating ageing of a three-way catalyst for an assembly (1) comprising:
a) a spark ignition internal combustion engine (2);
b) an exhaust after-treatment system (10) comprising a three-way catalyst (14);
c) a lambda sensor (LSF) arranged downstream of said catalyst (14), considering a flow direction of exhaust gases in said catalyst (14); said lambda sensor (LSF) generating an actual output signal (U); and
d) an injection device (8) supplying fuel to said engine (2) ; the method comprising the step of controlling said injection device (8) according to a set-point (λset), indicative of a desired air/fuel ratio during combustion of a mixture of fuel and air in said engine (2);
wherein the method comprises the steps of:
- setting a wobbling pattern for said set-point (λset) so as to operate said engine (2) with alternating lean combustion phases and rich combustion phases;
- calculating a first value of a parameter that is indicative of a signal amplitude, said first value being calculated in relation to said actual output signal (U);
- comparing said first value with a reference so as to evaluate a possible ageing of the three-way catalyst;
**characterized by** comprising the steps of:
- simulating said catalyst (14) by a catalyst model;
- generating, in said catalyst model, data (D3) indicative of an estimated composition of exhaust gases exiting from said catalyst (14);
- simulating said lambda sensor (LSF) by a sensor model;
- generating an estimated output signal (Umod) in said sensor model, on the basis of said data (D3);
- calculating a second value of said parameter, said second value being calculated in relation to said estimated output signal (Umod);
- determining said reference as a function of said second value.

2. - The method according to claim 1, **characterized in that** said catalyst model comprises a plurality of cells (Cell1, Cell2, ..., Celln), which correspond to respective areas arranged in series in said catalyst (14) along said flow direction and are associated to respective oxygen levels (Ocell1, Ocell2, ... Ocelln); said catalyst (14) having a maximum oxygen storage capacity, which is set in said catalyst model and is reduced if said first value is higher than said reference.

3. - The method according to claim 2, **characterized in that** the reduction of said maximum oxygen storage capacity is obtained by a reduction factor which is calculated by means of a proportional-integrative control.

4. - The method according to anyone of the previous claims, **characterized by** calculating a signal average value in relation to said actual output signal (U); said comparing step being carried out when said signal average value corresponds to a target.

5. - The method according to claim 4, **characterized by** calculating a further signal average value in relation to said estimated output signal (Umod), and determining said target as a function of said further signal average value.

6. - The method according to anyone of the previous claims, **characterized by** emitting a warning signal if said first value is higher than said reference.

7. - The method according to anyone of the previous claims, **characterized in that** said first value is calculated over a given sampling time, equal to at least one period of the wobbling pattern.

8. - The method according to anyone of the previous claims, **characterized in that** said comparing step comprises the calculation of a ratio or a difference between said first value and said reference; said ratio or difference being then integrated.

9. - The method according to anyone of the previous claims, **characterized in that** said parameter comprises a standard deviation.

10. - The method according to anyone of the previous claims, **characterized in that** said wobbling pattern is defined by a constant upper level (L1), to bring the engine to the lean combustion phase, and by a lower constant level (L2), to bring the engine to the rich combustion phase; said upper and lower levels (L1,L2) being symmetric with respect to a stoichiometric condition.

11. - An electronic control unit (ECU) for an assembly (1) comprising:
a) a spark ignition internal combustion engine (2);
b) an exhaust after-treatment system (10) comprising a three-way catalyst (14);
c) a lambda sensor (LSF) arranged downstream of said catalyst (14), considering a flow direction of exhaust gases in said catalyst (14); said lambda sensor (LSF) generating an actual output signal (U); and
d) an injection device (8) supplying fuel to said engine (2) ; the electronic control unit (ECU) being configured to carry out the method according to anyone of the previous claims.

## Patentansprüche

1. Verfahren zum Bewerten der Alterung eines Dreiwegekatalysators für eine Anordnung (1), die Folgendes umfasst:
a) eine Fremdzündungs-Brennkraftmaschine (2);
b) ein Abgasnachbehandlungssystem (10), das einen Dreiwegekatalysator (14) umfasst;
c) eine Lambda-Sonde (LSF), die in Bezug auf die Strömungsrichtung des Abgases in dem Katalysator (14) hinter dem Katalysator (14) angeordnet ist; wobei die Lambda-Sonde (LSF) ein Ist-Ausgangssignal (U) erzeugt; und
d) eine Einspritzvorrichtung (8), die der Kraftmaschine (2) Kraftstoff zuführt;
wobei das Verfahren den Schritt des Steuerns der Einspritzvorrichtung (8) entsprechend einem Sollwert (λset) umfasst, der ein erwünschtes Luft/Kraftstoff-Verhältnis während der Verbrennung eines Luft/Kraftstoff-Gemisches in der Kraftmaschine (2) anzeigt;
wobei das Verfahren die folgenden Schritte umfasst:
- Einstellen eines schwankenden Musters für den Sollwert (λset), um die Kraftmaschine (2) abwechselnd mit Phasen der mageren Verbrennung und Phasen der fetten Verbrennung zu betreiben;
- Berechnen eines ersten Wertes eines Parameters, der eine Signalamplitude anzeigt, wobei der erste Wert bezüglich des tatsächlichen Ausgangssignals (U) berechnet wird;
- Vergleichen des ersten Wertes mit einem Referenzwert, um ein mögliches Altern des Dreiwegekatalysators zu bewerten;
**dadurch gekennzeichnet, dass** es die folgenden Schritte umfasst:
- Simulieren des Katalysators (14) durch ein Katalysatormodell;
- Erzeugen, in dem Katalysatormodell, von Daten (D3), die eine geschätzte Zusammensetzung des Abgases, das aus dem Katalysator (14) austritt, anzeigen;
- Simulieren der Lambda-Sonde (LSF) durch ein Sondenmodell;
- Erzeugen eines geschätzten Ausgangssignals (Umod) in dem Sondenmodell auf der Grundlage der Daten (D3);
- Berechnen eines zweiten Wertes des Parameters, wobei der zweite Wert bezüglich des geschätzten Ausgangssignals (Umod) berechnet wird;
- Bestimmen des Referenzwerts als eine Funktion des zweiten Wertes.

2. Verfahren nach Anspruch 1, **dadurch gekennzeichnet, dass** das Katalysatormodell mehrere Zellen (Cell1, Cell2, ..., Celln) umfasst, die jeweiligen Bereichen entsprechen, die in dem Katalysator (14) entlang der Fließrichtung in Reihe angeordnet sind und jeweiligen Sauerstoffniveaus (Ocelll, Ocell2, ..., Ocelln) zugeordnet sind; wobei der Katalysator (14) eine maximale Sauerstoffspeicherkapazität aufweist, die in dem Katalysatormodell eingestellt worden ist und verringert wird, wenn der erste Wert größer ist als der Referenzwert.

3. Verfahren nach Anspruch 2, **dadurch gekennzeichnet, dass** die Verringerung der maximalen Sauerstoffspeicherkapazität durch einen Verringerungsfaktor erhalten wird, der mittels einer proportional-integrativen Regelung berechnet wird.

4. Verfahren nach einem der vorhergehenden Ansprüche, **gekennzeichnet durch** das Berechnen eines Signalmittelwertes bezüglich des tatsächlichen Ausgangssignals (U); wobei der Schritt des Vergleichens ausgeführt wird, wenn der Signalmittelwert einem Zielwert entspricht.

5. Verfahren nach Anspruch 4, **gekennzeichnet durch** das Berechnen eines weiteren Signalmittelwerts bezüglich des geschätzten Ausgangssignals (Umod) und Bestimmen des Zielwerts als eine Funktion des weiteren Signalmittelwerts.

6. Verfahren nach einem der vorhergehenden Ansprüche, **gekennzeichnet durch** das Emittieren eines Warnsignals, wenn der erste Wert größer ist als der Referenzwert.

7. Verfahren nach einem der vorhergehenden Ansprüche, **dadurch gekennzeichnet, dass** der erste Wert über eine vorgegebene Abtastdauer berechnet wird, die gleich zumindest einer Periode des schwankenden Musters ist.

8. Verfahren nach einem der vorhergehenden Ansprüche, **dadurch gekennzeichnet, dass** der Schritt des Vergleichens das Berechnen eines Verhältnisses oder einer Differenz zwischen dem ersten Wert und der Referenz umfasst; wobei das Verhältnis oder die Differenz dann integriert wird.

9. Verfahren nach einem der vorhergehenden Ansprüche, **dadurch gekennzeichnet, dass** der Parameter eine Standardabweichung umfasst.

10. Verfahren nach einem der vorhergehenden Ansprüche, **dadurch gekennzeichnet, dass** das schwankende Muster durch ein konstantes oberes Niveau (L1), um die Kraftmaschine in die Phase der mageren Verbrennung zu bringen, und durch ein konstantes unteres Niveau (L2), um die Kraftmaschine in die Phase der fetten Verbrennung zu bringen, definiert ist; wobei das obere und das untere Niveau (L1, L2) bezüglich einer stöchiometrischen Bedingung symmetrisch sind.

11. Elektronische Steuereinheit (ECU) für eine Anordnung (1), die Folgendes umfasst:
a) eine Fremdzündungs-Brennkraftmaschine (2);
b) ein Abgasnachbehandlungssystem (10), das einen Dreiwegekatalysator (14) umfasst;
c) eine Lambda-Sonde (LSF), die in Bezug auf die Strömungsrichtung des Abgases in dem Katalysator (14) hinter dem Katalysator angeordnet ist; wobei die Lambda-Sonde (LSF) ein tatsächliches Ausgangssignal (U) erzeugt; und
d) eine Einspritzvorrichtung (8), die der Kraftmaschine (2) Kraftstoff zuführt;
wobei die elektronische Steuereinheit (ECU) konfiguriert ist, um das Verfahren nach einem der vorhergehenden Ansprüche durchzuführen.

## Revendications

1. Méthode pour évaluer un vieillissement d'un catalyseur à trois voies pour un ensemble (1) comprenant :
a) un moteur (2) à combustion interne à allumage commandé ;
b) un système de post-traitement des gaz d'échappement (10) comprenant un catalyseur (14) à trois voies ;
c) un capteur lambda (LSF) agencé en aval dudit catalyseur (14), étant donné une direction d'écoulement de gaz d'échappement dans ledit catalyseur (14) ; ledit capteur lambda (LSF) générant un signal de sortie réel (U) ; et
d) un dispositif d'injection (8) fournissant du carburant audit moteur (2) ;
la méthode comprenant l'étape de commande dudit dispositif d'injection (8) selon un point de réglage (λset), indiquant un rapport air-carburant souhaité durant une combustion d'un mélange de carburant et d'air dans ledit moteur (2) ;
dans laquelle la méthode comprend les étapes de :
- réglage d'un motif d'oscillation pour ledit point de réglage (λset) de façon à faire fonctionner ledit moteur (2) avec des phases de combustion pauvre et des phases de combustion riche alternantes ;
- calcul d'une première valeur d'un paramètre qui indique une amplitude de signal, ladite première valeur étant calculée par rapport audit signal de sortie réel (U) ;
- comparaison de ladite première valeur à une référence de façon à évaluer un vieillissement possible du catalyseur à trois voies ;
**caractérisée en ce qu'**elle comprend les étapes de :
- simulation dudit catalyseur (14) par un modèle de catalyseur ;
- génération, dans ledit modèle de catalyseur, de données (D3) indiquant une composition estimée de gaz d'échappement sortant dudit catalyseur (14) ;
- simulation dudit capteur lambda (LSF) par un modèle de capteur ;
- génération d'un signal de sortie estimé (Umod) dans ledit modèle de capteur, sur la base desdites données (D3) ;
- calcule d'une seconde valeur dudit paramètre, ladite seconde valeur étant calculée par rapport audit signal de sortie estimé (Umod) ;
- détermination de ladite référence en fonction de ladite seconde valeur.

2. Méthode selon la revendication 1, **caractérisée en ce que** ledit modèle de catalyseur comprend une pluralité de cellules (Cell1, Cell2, ..., Celln), qui correspondent à des zones respectives agencées en série dans ledit catalyseur (14) le long de ladite direction d'écoulement et sont associées à des niveaux d'oxygène (Ocell1, Ocell2, ..., Ocelln) respectifs ; ledit catalyseur (14) ayant une capacité de stockage d'oxygène maximale, qui est réglée dans ledit modèle de catalyseur et est réduite si ladite première valeur est plus élevée que ladite référence.

3. Méthode selon la revendication 2, **caractérisée en ce que** la réduction de ladite capacité de stockage d'oxygène maximale est obtenue par un facteur de réduction qui est calculé au moyen d'une commande proportionnelle intégrale.

4. Méthode selon l'une quelconque des revendications précédentes, **caractérisée par** le calcul d'une valeur moyenne de signal par rapport audit signal de sortie réel (U) ; ladite étape de comparaison étant réalisée lorsque ladite valeur moyenne de signal correspond à une cible.

5. Méthode selon la revendication 4, **caractérisée par** le calcul d'une autre valeur moyenne de signal par rapport audit signal de sortie estimé (Umod), et la détermination de ladite cible en fonction de ladite autre valeur moyenne de signal.

6. Méthode selon l'une quelconque des revendications précédentes, **caractérisée par** l'émission d'un signal d'avertissement si ladite première valeur est plus élevée que ladite référence.

7. Méthode selon l'une quelconque des revendications précédentes, **caractérisée en ce que** ladite première valeur est calculée sur un temps d'échantillonnage donné, égal à au moins une période du motif d'oscillation.

8. Méthode selon l'une quelconque des revendications précédentes, **caractérisée en ce que** ladite étape de comparaison comprend le calcul d'un rapport ou d'une différence entre ladite première valeur et ladite référence ; ledit rapport ou ladite différence étant ensuite intégrés.

9. Méthode selon l'une quelconque des revendications précédentes, **caractérisée en ce que** ledit paramètre comprend un écart-type.

10. Méthode selon l'une quelconque des revendications précédentes, **caractérisée en ce que** ledit motif d'oscillation est défini par un niveau supérieur (L1) constant, pour amener le moteur à la phase de combustion pauvre, et par un niveau inférieur (L2) constant, pour amener le moteur à la phase de combustion riche ; lesdits niveaux supérieur et inférieur (L1, L2) étant symétriques quant à une condition stoechiométrique.

11. Bloc de commande électronique (ECU) pour un ensemble (1) comprenant :
a) un moteur (2) à combustion interne à allumage commandé ;
b) un système de post-traitement des gaz d'échappement (10) comprenant un catalyseur (14) à trois voies ;
c) un capteur lambda (LSF) agencé en aval dudit catalyseur (14), étant donné une direction d'écoulement de gaz d'échappement dans ledit catalyseur (14) ; ledit capteur lambda (LSF) générant un signal de sortie réel (U) ; et
d) un dispositif d'injection (8) fournissant du carburant audit moteur (2) ;
le bloc de commande électronique (ECU) étant configuré pour réaliser la méthode selon l'une quelconque des revendications précédentes.
